(19) **Europäisches Patentamt**

**European Patent Office**

**Office européen des brevets**

(11) **EP 1 057 860 B1**

(12) **EUROPÄISCHE PATENTSCHRIFT**

(45) Veröffentlichungstag und Bekanntmachung des Hinweises auf die Patenterteilung:
**04.08.2004 Patentblatt 2004/32**

(51) Int Cl.$^7$: **C08K 5/39**, C08L 21/00

(21) Anmeldenummer: **00110297.9**

(22) Anmeldetag: **24.05.2000**

(54) **Dienkautschukmischungen für verbesserte Gummi-Formkörper**

Diene rubber compositions for improved molded rubber part

Compositions de caoutchouc diénique pour objets moulés améliorés en caoutchouc

(84) Benannte Vertragsstaaten:
**DE FR GB IT**

(30) Priorität: **04.06.1999 DE 19925633**

(43) Veröffentlichungstag der Anmeldung:
**06.12.2000 Patentblatt 2000/49**

(73) Patentinhaber: **BAYER AG**
**51368 Leverkusen (DE)**

(72) Erfinder:
• **Jeske, Winfried**
**51399 Burscheid (DE)**
• **Buding, Hartmuth, Dr.**
**52445 Titz (DE)**

• **Weidenhaupt, Hermann-Josef, Dr.**
**50259 Pulheim (DE)**

(56) Entgegenhaltungen:
**EP-A- 0 530 590**      **EP-A- 1 000 968**

• **NORDSIEK K H ET AL: "STABLE CROSSLINKS BY DITHIOALKANE VULCANIZATION A ROUTE TO HEAT-RESISTANT DIENE ELASTOMERS" KAUTSCHUK UND GUMMI - KUNSTSTOFFE,DE,DR. ALFRED HUTHIG VERLAG GMBH. HEIDELBERG, Bd. 47, Nr. 5, 1. Mai 1994 (1994-05-01), Seiten 319-327, XP000451044 ISSN: 0948-3276**

**Beschreibung**

Die vorliegende Erfindung betrifft vulkanisierbare Dienkautschukmischungen mit hoher Variationsmöglichkeit bei der Schwefeldosierung unter Erhalt einer hohen Verarbeitungssicherheit für die Herstellung von verbesserten Gummi-Formkörpern, insbesondere von Reifenbauteilen.

Reifenbauteile bedürfen wegen der dynamischen Beanspruchung des Reifens einer guten thermischen und mechanischen Stabilität, um eine gute Haltbarkeit des Reifen zu gewährleisten. Im Hinblick auf die mechanische Stabilität ist insbesondere ein hoher Modul und ein hoher Weiterreißwiderstand bei gegebener Vulkanisathärte gewünscht.

Die Wirtschaftlichkeit bei der Nutzung von Reifen, insbesondere von LKW-Reifen, wird nicht zuletzt durch die Anzahl der insgesamt möglichen Runderneuerungen der Reifenlauffläche bestimmt. Eine mehrmalige Runderneuerung der Reifenlauffläche ist jedoch nur in dem Maße möglich, wie der beanspruchte Unterbau des Reifens dies zuläßt.

Aus den Patentanmeldungen EP 385 072, EP 385 073, EP 432 405 und EP 432 417 sind $\alpha,\omega$-Bis(N,N'-diethylthiocarbamoyldithio)-alkane und 1,2-Bis(N,N'-dibenzylthiocarbamoyldithio)-ethan als Vernetzer für Dienkautschuk im Hinblick auf die Herstellung von Reifenlaufflächen und Reifenseitenwänden bekannt. Den Diethylamin-Deßvaten ist gemeinsam, daß sie bei der Vulkanisation der Kautschukmischung Diethylamin freisetzen können, welches human-carzinogenes Diethylnitrosamin bilden kann. 1,2-Bis(N,N'-dibenzylthiocarbamoyldithio)-ethan vermag zwar kein human-carzinogenes Dibenzylnitrosamin zu bilden (vgl. Druckrey et al., Z. Krebsforschung 69 (1967) 103), jedoch kann aufgrund der Lehre der DE 22 56 511 nicht ausgeschlossen werden, daß diese Verbindung mit seinem 1,2-Dithioethandiyl-Rest zu übelriechenden Vulkanisaten führt (vgl. Seite 17, Absatz 2), wohingegen $\alpha,\omega$-Dithioalkandiyl-Reste mit mehr als 4 Kohlenstoffatomen Vulkanisate ergeben, die geruchlich unproblematisch sind.

In den vorbenannten Europäischen Patentanmeldungen werden die erfindungsgemäßen Vernetzer ohne Schwefelzusätze angewendet. Es wird daraufhingewiesen, daß die zusätzliche Verwendung von Schwefel in der Regel keine Vorteile bringt, da das Reversionsverhalten der Vulkanisate verschlechtert wird.

Die EP 530 590 offenbart ein Verfahren zur Herstellung von Dienkautschukvulkanisaten mit einem Vernetzersystem bestehend aus 1 bis 4,5 Gew.-Teilen 1,2-Bis(N,N'dibenzylthiocarbamoyldithio)-ethan oder 1,6-Bis(N,N'-dibenzylthiocarbamoyldithio)-hexan, 0,05 bis 0,3 Gew.-Teilen Schwefel und ausgesuchten Mengen an Vulkanisationsbeschleunigern. Die besondere Lehre besteht darin, daß durch die Anwendung von sehr kleinen Mengen an Schwefel die Einsatzmenge der Vernetzer reduziert werden kann (Wirtschaftlichkeit) und unter Vermeidung von Ausblüherscheinungen im Vulkanisat nach relativ kurzen Vulkanisationszeiten Elastomere von bisher nicht erreichter Alterungs- und Reversionsbeständigkeit erhalten werden können ( Seite 7, Zeilen 25 bis 27). Als Beispiele für die Verwendung solcher Vulkanisate sind Fahrzeugreifen und Motorlager genannt.

Darüber hinaus wird in der DE 22 56 511 die Verwendung von Verbindungen der allgemeinen Formel A - S - S- R - S - S - A' zur Vulkanisation von Kautschuken in sehr allgemeiner Form diskutiert, wobei R ein fast beliebiger zweiwertiger organischer Rest und A und A' eine sehr große Anzahl von Beschleunigerresten, u.a. auch N-substituierte Thiocarbamoylreste, darstellen. Die Vernetzer können alleine oder auch in Kombination mit Schwefel und Vulkanisationsbeschleuniger eingesetzt werden. Die Dosierung an elementarem Schwefel liegt bevorzugt im Bereich von 0,5 bis 1,5 Gew.-Teilen Schwefel, bezogen auf 100 Gew.-Teile Kautschuk. Auf Seite 32, Absatz 2, wird gelehrt, daß die Vernetzer der Erfindung in Kombination mit größeren Mengen als 1,5 Gew.-Teilen Schwefel eine Abnahme der Verarbeitungssicherheit der Kautschukmischungen zur Folge haben.

Ein Maß für die Verarbeitungssicherheit ist die Mooney-Anvulkanisationszeit. Eine kurze Mooney-Anvulkanisationszeit bedeutet eine geringe Verarbeitungssicherheit, eine lange Mooney-Anvulkanisationszeit bedeutet eine hohe Verarbeitungssicherheit. Eine hohe Verarbeitungssicherheit von Kautschukmischungen ist sehr erwünscht, weil dadurch auf einen Zusatz an Vulkanisationsverzögerer verzichtet werden kann.

Mit dem Grundansatzes A (NR-Mischung) wird in der DE 22 56 511 gezeigt, daß die Kautschukmischung gemäß Beispiel 7 der Tabelle VII mit 1,0 Gew.-Teilen 1,2-Bis(N,N'-dimethylthiocarbamoyldithio)-ethan und 1,7 Gew.-Teilen Schwefel eine Mooney-Anvulkanisationszeit ($t_5/121°C$) von nur 25,7 min aufweist. Im Vergleich hierzu liegt bei der Mischung gemäß Beispiel 1 der Tabelle III (Kontrollbeispiel) mit 2,0 Gew.-Teilen Schwefel und 0,5 Gew.-Teilen Santocure NS (Benzothiazyl-2-tert. butylsulfenamid, TBBS) als Beschleuniger die entsprechende Mooney-Anvulkanisationszeit dagegen bei 32,0 min, d.h. die Verarbeitungssicherheit der Kautschukmischung in Beispiel 7 der Tabelle VII mit 1,7 Gew.-Teilen Schwefel ist gegenüber dem Kontrollbeispiel tatsächlich schlechter geworden. Ausweislich Beispiel 6 in Tabelle VII erfolgt eine Verschlechterung der Verarbeitungssicherheit defacto sogar schon bei einer Schwefeldosierung von mehr als 1,0 Gew.-Teilen gemessen an der Kontrollmischung (vgl. Beispiel 1, Tabelle III). Die Kautschukmischungen, die die Vernetzer der Erfindung enthalten, sind zur Bindung bzw. Verklebung von natürlichen oder synthetischen Textilfasern geeignet (Seite 35, Absatz 2).

Es besteht - wie eingangs beschrieben - daher ein dringender Bedarf an vulkanisierbaren Kautschukmischungen für die Herstellung von verbesserten Reifenbauteilen, insbesondere was die Arbeitshygiene, die Verarbeitungssicherheit der Kautschukmischung sowie das mechanische und dynamische Eigenschaftsprofil als auch das Alterungsverhalten der Vulkanisate betrifft.

Aufgabe der vorliegenden Erfindung ist es nun, vulkanisierbare Kautschukmischungen mit hoher Variationsmöglichkeit bei der Schwefeldosierung unter Erhalt einer hohen Verarbeitungssicherheit für die Herstellung von verbesserten Reifenbauteilen bereitzustellen, die bei der Vulkanisation keine human-carzinogene Nitrosamine freisetzen, deren Vulkanisate frei von üblen Gerüchen an schwefelorganischen Verbindungen sind und die nicht nur während der Alterung ihre technologischen Eigenschaften nicht oder nur wenig verschlechtern, sondern, die auch bereits vor der Alterung im Hinblick auf Modul und Weiterreißwiderstand verbessert sind bzw. bei denen das Modul-Niveau praktisch unverändert, aber der Weiterreißwiderstand verbessert ist, ohne daß dabei andere wichtige technologischen Eigenschaften, wie der Verlustfaktor tan δ bei 70°C oder der Heat Build-Up, in ihrem Niveau verschlechter werden.

Zu erwähnen ist in diesem Zusammenhang, daß überlicherweise Modul und Weiterreißwiderstand diametral zu einander sind, d.h. Vulkanisate mit hohem Modul haben üblicherweise einen kleinen Weiterreißwiderstand und umgekehrt.

Die Aufgabe der Erfindung wurde überraschenderweise gelöst durch Vulkanisation einer Kautschukmischung basierend auf Dienkautschuken mit einem speziellen $C_6$-Brücken-liefernden Vernetzer in Kombination mit einer ausgewählten Menge an Schwefel in Gegenwart von Vulkanisationsbeschleunigern.

Gegenstand der Erfindung sind daher vulkanisierbare Kautschukmischungen basierend auf Dienkautschuken und üblichen Zusätzen, die dadurch gekennzeichnet sind, daß das in den Mischungen enthaltene Vulkanisiersystem

α) 0,5 bis 3,8 Gew.-Teile der Verbindung (I)

$$R_2N - (C=S) - S - S - (CH_2)_X - S - S - (C=S) - NR_2 \hspace{3cm} (I)$$

mit R = $(C_6H_5CH_2)$ und X = 6,

β) 0,5 bis 2 Gew.-Teile Schwefel,

γ) 0,5 bis 3,0 Gew.-Teile Vulkanisationsbeschleuniger
und

δ) 0 bis 8 Gewichtsteile Kieselsäure

enthält, wobei die Gew.-Teile jeweils auf 100 Gew.-Teile eingesetzten Kautschuk bezogen sind.

Die Synthese der Verbindung (I), des Vernetzers ist in der EP 0 432 405 prinzipiell beschrieben.

Die Herstellung der erfindungsgemäßen Kautschukmischung erfolgt in an sich bekannter Weise durch übliches Vermischen der Kautschukkomponenten mit den bekannten Zusätzen bzw. Zuschlagstoffen, wie Ruß, Weichmacher, Alterungsschutzmittel, Zinkoxid, Stearinsäure, Harzen, sowie mit dem Vulkanisiersystem, wobei Zusätze in üblichen Mengen eingesetzt werden.

Als Dienkautschuke im Sinne der Erfindung sind zu nennen: Naturkautschuk (NR), Isoprenkautschuk (IR), Butadienkautschuk (BR) sowie Styrol-Butadienkautschuk (SBR), der nach dem Emulsionsverfahren als auch nach dem Lösungsverfahren hergestellt sein kann. Gleich gute Ergebnisse werden auch mit Verschnitten dieser Kautschuke untereinander erhalten.

Unter den Dienkautschukverschnitten wird ein Verschnitt aus 90 bis 50 Gew.-Teilen, bevorzugt 80 bis 60 Gew.-Teilen, NR und 10 bis 50 Gew.-Teilen, bevorzugt 20 bis 40 Gew.-Teilen, BR besonders bevorzugt.

Als NR für die erfindungsgemäße Kautschukmischung sind die üblicherweise in der Reifenindustrie eingesetzten NR-Typen geeignet.

Als BR für die erfindungsgemäße Kautschukmischung kommt insbesondere ein BR in Frage mit einem cis-1,4-Gehalt von 30 bis 100 Gew.-Teilen, bevorzugt von 90 bis 100 Gew.-Teilen, je 100 Gew.-Teilen dieses Kautschuks.

BR kann unverstreckt oder auch ölverstreckt eingesetzt werden. Bevorzugt ist die Verwendung von unverstrecktem BR.

Verbindung (I) wird in Mengen von 0,5 bis 3,8 Gew.-Teilen, bevorzugt in Mengen von 0,5 bis 3,5 Gew.-Teilen, eingesetzt. Als Schwefel kommt der üblicherweise in der kautschukverarbeitenden Industrie verwendete Schwefel oder auch unlöslicher Schwefel in Frage. Die bevorzugte Menge an Schwefel beträgt 0,5 bis 2 Gew.-Teile, insbesondere 0,5 bis 1,5 Gew.-Teile, bezogen auf 100 Gew.-Teile eingesetzten Kautschuk.

Selbstverständlich können auch die bekannten Schwefelspender, beispielsweise Caprolactamdisulfid, wie auch Abmischungen mit Schwefel eingesetzt werden. Die für den Verwendungszweck günstigste Menge an Schwefelspender kann durch Vorversuche leicht ermittelt werden.

Als Vulkanisationsbeschleuniger können die verschiedensten Typen eingesetzt werden und unterliegen keiner Einschränkung. Bevorzugt werden Mercaptobenzthiazol (MBT), Dibenzothiazyldisulfid (MBTS), Sulfenamide auf Basis von MBT, wie Benzothiazyl-2-cyclohexylsulfenamid (CBS), Benzothiazyl-2-dicyclohexylsulfenamid (DCBS), Benzothiazyl-2-tert. butylsulfenamid (TBBS) und Benzothiazyl-2-sulfenmorpholid (MBS) eingesetzt. Die Vulkanisationsbeschleuniger werden in Mengen von 0,5 bis 3,0 Gew.-Teilen, bevorzugt 0,5 bis 2,5 Gew.-Teilen, bezogen auf 100 Gew.-Teile eingesetzten Kautschuk, eingesetzt.

Bevorzugt wird eine Mischung aus CBS und MBS eingesetzt. Es können aber auch Mischungen aus anderen Vulkanisationsbeschleunigern eingesetzt werden, deren optimale Zusammensetzung hinsichtlich Typ und Menge leicht durch Versuche ermittelt werden kann.

Die Vulkanisation der erfindungsgemäßen Kautschukmischung wird in bekannter Weise bei Temperaturen von ca. 120° bis 220°C, bevorzugt von 140° bis 200°C, durchgeführt.

Die erfindungsgemäßen Kautschukmischungen können zur Herstellung von Gummi-Formkörpern insbesondere Reifenbauteilen eingesetzt werden, ganz bevorzugt zur Herstellung von verbesserten Drahtkappen, Seitenteil- und Wulststreifen, Schulterpolster, Gürtelabdeckungen, Seitenwandverstärkungen (sidewall inserts) und Laufflächen-Unterplatten sowie Laufflächen von Reifen, insbesondere von LKW-Reifen.

## Beispiele

Erläuterungen zum experimentellen Teil

Folgende Testmethoden bzw. Testvorrichtungen wurden benützt: Mooney-Viskosität: DIN 53 523, großer Rotor, 100°C, Vorwärmzeit 1 min., Testzeit 4 min. Mooney-Anvulkanisation: DIN 53 523, großer Rotor, 130°C, Vorwärmzeit 1 min. Rheometer: ASTM D 2084, Monsanto MDR 2000 E, 170°C. Zugversuch: DIN 53 405, S2-Stab. Härte: DIN 53 505. Rückprallelastizität: DIN 53 512. Dynamische Eigenschaften: DIN 53533, Goodrich-Flexometer, 100°C/25 min, Vorspannung 1 MPa, Hub 4,45 mm. Viskoelastische Eigenschaften: DIN 53 513/ISO 4664, Roelig-Test, 10 Hz.

## Beispiel 1

Mit Hilfe eines Innenmischers vom Typ GK 1,5 E der Firma Werner & Pfleiderer wurden bei einer Rotordrehzahl von 40 upm und einer Kammer- und Schaufeltemperatur von 50°C (Stempeldruck 8 bar, Füllgrad 65%) Testmischungen gemäß Tabelle 1 hergestellt. Die Mengenangaben stellen Gew.-Teile pro 100 Gew.-Teile Kautschuk dar.

Tabelle 1:

| Testrezeptur | | | | |
|---|---|---|---|---|
| | Vergleich 1 | Erfindung | Erfindung | Vergleich 2 |
| Mischungsnummer | 1 | 2 | 3 | 4 |
| NR [a] | 80 | 80 | 80 | 80 |
| BR [b] | 20 | 20 | 20 | 20 |
| Ruß N234 | 40 | 40 | 40 | 40 |
| Kieselsäure [c] | 8 | 8 | 8 | 8 |
| Zinkoxid [d] | 10 | 10 | 10 | 10 |
| Weichmacher [e] | 3 | 3 | 3 | 3 |
| Klebrigmacher [f] | 2 | 2 | 2 | 2 |
| 6PPD [g] | 1,8 | 1,8 | 1,8 | 1,8 |
| TMQ [h] | 1,2 | 1,2 | 1,2 | 1,2 |
| Stearinsäure | 0,75 | 0,75 | 0,75 | 0,75 |

[a] TSR 5, Defo 700

[b] Buna® CB 25 der Bayer AG, Leverkusen, Germany, cis-1,4-Gehalt: min. 96%, Mooney-Viskosität ML (1+4) 100°C = 44

[c] Vulkasil® S der Bayer AG, Leverkusen, Germany, BET-Oberfläche: 155-195 m$^2$/g, pH-Wert: 5,4-7,0

[d] Zinkoxid RS der Fa. Grillo Zinkoxide GmbH, Goslar, Germany

[e] Enerthene® 1849/1 (aromatisches Mineralöl) der Firma BP Oil Deutschland GmbH, Hamburg

[f] Koresin® Pulver der BASF AG, Mannheim, Germany

[g] Vulkanox® 4020/LG (N-(1,3-Dimethylbutyl)-N'-phenyl-p-phenylendiamin) der Bayer AG, Leverkusen, Germany

[h] Vulkanox® HS/LG (2,2,4-Trimethyl-1,2-dihydrochinolin, polymerisiert) der Bayer AG, Leverkusen, Germany

Tabelle 1: (fortgesetzt)

| Testrezeptur | | | | |
|---|---|---|---|---|
| | Vergleich 1 | Erfindung | Erfindung | Vergleich 2 |
| Mischungsnummer | 1 | 2 | 3 | 4 |
| Resorcin-Formulierung (66,6%ig) [i] | 1,2 | 1,2 | 1,2 | 1,2 |
| HMT [j] | 0,6 | 0,6 | 0,6 | 0,6 |
| CBS [k] | 0,7 | 0,7 | 0,7 | 0,7 |
| MBTS [l] | 0,3 | 0,3 | 0,3 | 0,3 |
| Schwefel | 3 | 1 | 0,5 | 0,5 |
| Vernetzer (I) | 0 | 2 | 3 | 4 |

[i] Cohedur® RS der Bayer AG, Leverkusen, Germany

[j] Cohedur® H30 (Hexamethylentetramin, HMT) der Bayer AG, Leverkusen, Germany

[k] Vulkacit® CZ/C (Benzothiazyl-2-cyclohexylsulfenamid, CBS) der Bayer AG, Leverkusen, Germany

[l] Vulkacit® DM (Dibenzothiazyldisulfid, MBTS) der Bayer AG, Leverkusen, Germany

Die Mischfolge für die Herstellung der Mischungen wurde, wie nachstehend beschrieben, gewählt:

| t = 0 sec | Zugabe Polymere |
|---|---|
| t = 10 sec | Stempel ab |
| t = 30 sec | Stempel auf, Zugabe Ruß und Weichmacher, Stempel ab |
| t = 90 sec | Stempel auf, Zugabe Kieselsäure, Zinkoxid, Klebrigmacher Alterungsschutzmittel, Stearinsäure und Resorcin, Stempel ab |
| t = 210 sec | fegen |
| t = 240 sec | auswerfen |

Die Mischguttemperaturen lagen beim Entleeren des Kneters im Bereich von 91 bis 92°C.

HMT sowie das Vulkanisiersystem, bestehend aus Schwefel, CBS, MBTS und Vernetzer (I) wurden auf der Walze bei einer Mischungstemperatur von ca. 60°C eingemischt.

Die ermittelten rheologischen Daten der fertig gemischten Kautschukmischungen sind in Tabelle 2 zusammengefaßt.

Tabelle 2

| Rheologische Daten der Testmischungen | | | | |
|---|---|---|---|---|
| | Vergleich 1 | Erfindung | Erfindung | Vergleich 2 |
| Mischungsnummer | 1 | 2 | 3 | 4 |
| ML (1+4) 100°C (ME) | 64 | 69 | 67 | 73 |
| Anvulkanisationszeit (120°C) $t_5$ (min) | 15,3 | 23,3 | 28,0 | 29 |
| Rheometer, 150°C | | | | |
| ts01 (min) | 2,1 | 3,5 | 4,5 | 4,5 |
| t95 (min) | 10,1 | 9,0 | 12,9 | 13,4 |
| Smin (dNm) | 1,6 | 2,6 | 2,6 | 2,5 |
| S'max (dNm) | 17,9 | 19,5 | 18,6 | 19,8 |
| Send, 30 min (dNm) | 17,6 | 19,3 | 18,5 | 19,7 |
| Rheometer, 180°C | | | | |
| ts01 (min) | 0,5 | 0,7 | 0,9 | 0,9 |
| t95 (min) | 1,7 | 1,7 | 2,4 | 2,5 |
| Smin (dNm) | 1,4 | 2,4 | 2,3 | 2,3 |

Tabelle 2   (fortgesetzt)

| Rheologische Daten der Testmischungen | | | | |
|---|---|---|---|---|
| | Vergleich 1 | Erfindung | Erfindung | Vergleich 2 |
| Rheometer, 180°C | | | | |
| S'max (dNm) | 17,7 | 18,1 | 17,1 | 18,4 |
| Send, 30 min (dNm) | 11,1 | 17,0 | 16,7 | 18,2 |

Die erfindungsgemäßen Kautschukmischungen wurden bei 150°C vulkanisiert (Vulkanisationszeit: t95 + formenspezifischer Zuschlag). Die Prüfergebnisse der Vulkanisate sind in Tabelle 3 zusammengefaßt.

Tabelle 3

| Eigenschaften der Testvulkanisate | | | | |
|---|---|---|---|---|
| | Vergleich 1 | Erfindung | Erfindung | Vergleich 2 |
| Vulkanisatnummer | 1 | 2 | 3 | 4 |
| Festigkeit (MPa) | 21 | 24 | 22 | 20 |
| Bruchdehnung (%) | 440 | 452 | 423 | 382 |
| Modul 100 (MPa) | 2,4 | 2,8 | 2,7 | 2,9 |
| Modul 300 (MPa) | 12,4 | 14,2 | 13,9 | 14,7 |
| Weiterreißwiderstand (N/mm) | 28 | 41 | 45 | 25 |
| Härte, 23°C (Shore A) | 65 | 66 | 64 | 66 |
| Härte, 70°C (Shore A) | 63 | 64 | 62 | 64 |
| Rückprallelastizität, 23°C (%) | 60 | 62 | 59 | 63 |
| Rückprallelastizität, 70°C (%) | 69 | 73 | 72 | 73 |
| Goodrich-Flexometer: | | | | |
| Temp.-Erhöhung (°C) | 11 | 8 | 8 | 9 |
| Fließen (%) | 5,3 | 0,9 | 0,6 | 1,0 |
| Bleibende Verformung (%) | 7,1 | 1,6 | 1,6 | 1,2 |
| Roelig-Test: | | | | |
| tan δ, 0°C | 0,113 | 0,104 | 0,104 | 0,108 |
| Dyn. Modul E', 0°C (MPa) | 6,38 | 6,76 | 6,63 | 7,09 |
| Verlust-Modul E'', 0°C (MPa) | 0,723 | 0,700 | 0,689 | 0,767 |
| tan δ, 70°C | 0,043 | 0,035 | 0,041 | 0,050 |
| Dyn. Modul E',70°C (MPa) | 5,91 | 6,23 | 5,95 | 6,28 |
| Verlust-Modul E'', 70°C (MPa) | 0,254 | 0,243 | 0,242 | 0,311 |

Die Beispiele lehren, daß die erfindungsgemäßen Kautschukmischungen eine hohe Verarbeitungssicherheit aufweisen und Vulkanisate mit verbessertem Modul bei gleichzeitig verbessertem Weiterreißwiderstand ergeben, die darüber hinaus noch einen niedrigen Heat Build-Up sowie einen kleinen tan δ bei 70°C zeigen.

**Beispiel 2**

Man arbeitete wie in Beispiel 1, Mischungsnummer 2 der Tabelle 1, setzte jedoch statt 1,0 Gew.-Teilen Schwefel jetzt 2,0 Gew.-Teile Schwefel ein und statt 2,0 Gew.-Teilen Vernetzer (I) jetzt 1,0 Gew.-Teile Vernetzer (I).
Die Mooney-Viskosität ML (1+4) 100°C der erhaltenen Mischung betrug 66 und die Mooney-Anvulkanisationszeit $t_5$ wurde bei 120°C zu 21 min ermittelt.
Nach entsprechender Vulkanisation der Mischung wurde der Modul 100 zu 3,2 MPa, der Weiterreißwiderstand zu 37 N/mm und die Temperaturerhöhung im Goodrich-Flexometer zu 8°C bestimmt. Der Roelig-Test ergab bei 70°C einen tan δ von 0,035.
Dieses Ausführungsbeispiel lehrt, daß Kautschukmischungen gemäß der vorliegenden Erfindung gegenüber der Kontrollmischung (vgl. Mischungsnummer 1) selbst dann noch eine ausgezeichnete Verarbeitungssicherheit aufweisen, wenn die Schwefeldosierung 2,0 Gew.-Teile pro 100 Gew.-Teile Kautschuk beträgt.

**Beispiel 3**

Mit Hilfe des in Beispiel 1 beschrieben Innenmischers, wurden bei einer Rotordrehzahl von 40 upm und einer Kammer- und Schaufeltemperatur von 50°C (Stempeldruck 8 bar, Füllgrad 65%) Testmischungen gemäß Tabelle 4 hergestellt. Die Mengenangaben stellen Gew.-Teile pro 100 Gew.-Teile Kautschuk dar.

Tabelle 4

| Testrezeptur | | |
|---|---|---|
| | Vergleich | Erfindung |
| Mischungsnummer | 1 | 2 |
| NR [a) | 100 | 100 |
| Ruß N375 | 50 | 50 |
| Zinkoxid [d) | 5 | 5 |
| Weichmacher [e) | 3 | 3 |
| 6PPD [g) | 2 | 2 |
| TMQ [h) | 1 | 1 |
| Stearinsäure | 1 | 1 |
| Mikrokristallines Wachs [m) | 1 | 1 |
| CBS [k) | 1 | 1 |
| Schwefel | 1,5 | 0,8 |
| Vernetzer (I) | 0 | 1,5 |

[a) SMR 5, mastiziert
[d), [e), [g), [h), [k) siehe Erläuterungen zu Tabelle 1
[m) Antilux® 654 der Firma Rhein Chemie Rheinau GmbH, Mannheim

Die Mischfolge für die Herstellung der Mischungen wurde, wie nachstehend beschrieben, gewählt:

| t = 0 sec | Zugabe Polymere |
|---|---|
| t = 10 sec | Stempel ab |
| t = 60 sec | Stempel auf, Zugabe Ruß, Weichmacher, Zinkoxid, Stearinsäure, Stempel ab |
| t = 120 sec | Stempel auf, Zugabe Alterungsschutzmittel und Wachs, Stempel ab |
| t = 180 sec | fegen |
| t = 240 sec | auswerfen |

Die Mischguttemperaturen lagen beim Entleeren des Kneters im Bereich von 112° bis 114°C.
Das Vulkanisiersystem, bestehend aus Schwefel, Beschleuniger und Vernetzer (I) wurde auf der Walze bei einer Mischungstemperatur von ca. 65°C eingemischt.
Die ermittelten rheologischen Daten der fertig gemischten Kautschukmischungen sind in Tabelle 5 zusammengefaßt.

Tabelle 5

| Rheologische Daten der Testmischungen | | |
|---|---|---|
| | Vergleich | Erfindung |
| Mischungsnummer | 1 | 2 |
| ML (1+4) 100°C (ME) | 75 | 73 |
| Anvulkanisationszeit (120°C) $t_5$ (min) | 21 | 26 |
| Rheometer, 160°C | | |
| ts01 (min) | 1,6 | 2,1 |

Tabelle 5   (fortgesetzt)

| Rheologische Daten der Testmischungen | | |
|---|---|---|
| | Vergleich | Erfindung |
| Rheometer, 160°C | | |
| t90 (min) | 3,6 | 4,0 |
| t95 (min) | 4,0 | 4,9 |
| Smin (dNm) | 3,4 | 3,2 |
| S'max (dNm) | 16,8 | 17,8 |
| Send, 30 min (dNm) | 13,7 | 18,0 |
| Reversion (%) | 18 | 0 |
| | | |
| Rheometer, 180°C | | |
| ts01 (min) | 0,5 | 0,8 |
| t90 (min) | 1,1 | 1,5 |
| t95 (min) | 1,2 | 1,9 |
| Smin (dNm) | 3,3 | 2,9 |
| S'max (dNm) | 16,4 | 16,6 |
| Send, 30min (dNm) | 10,8 | 15,7 |
| Reversion (%) | 34 | 5 |

Die Reversion wurde wie folgt berechnet: (S'max - Send) / S'max x 100%

Die Kautschukmischungen wurden bei 160°C vulkanisiert (Vulkanisationszeit: t95 + formenspezifischer Zuschlag). Die Prüfergebnisse der Vulkanisate sind in Tabelle 6 zusammengefaßt.

Tabelle 6

| Eigenschaften der Testvulkanisate | | |
|---|---|---|
| | Vergleich | Erfindung |
| Vulkanisatnummer | 1 | 2 |
| Festigkeit (MPa) | 27 | 28 |
| Bruchdehnung (%) | 550 | 529 |
| Modul 100 (MPa) | 2,1 | 2,8 |
| Modul 300 (MPa) | 11,5 | 13,4 |
| Härte, 23°C (Shore A) | 67 | 68 |
| Härte, 70°C (Shore A) | 61 | 62 |
| Rückprallelastizität, 23°C (%) | 43 | 40 |
| Rückprallelastizität, 70°C (%) | 56 | 52 |
| Weiterreißwiderstand (N/mm) | 38 | 92 |
| Abrieb (40er Schmirgel) (mm$^3$) | 161 | 112 |
| | | |
| Goodrich-Flexometer: | | |
| Temp.-Erhöhung (°C) | 27 | 21 |
| Fließen (%) | 8,7 | 2,3 |
| | | |
| Roelig-Test: | | |
| tan $\delta$, 0°C | 0,215 | 0,222 |
| Dyn. Modul E', 0°C (MPa) | 8,649 | 9,847 |
| Verlust-Modul E'', 0°C (MPa) | 1,859 | 2,188 |
| tan $\delta$, 70°C | 0,110 | 0,111 |

Tabelle 6   (fortgesetzt)

| Eigenschaften der Testvulkanisate | | |
|---|---|---|
| | Vergleich | Erfindung |
| Roelig-Test: | | |
| Dyn. Modul E',70°C (MPa) | 5,229 | 5,896 |
| Verlust-Modul E'', 70°C (MPa) | 0,577 | 0,656 |

Das Beispiel lehrt, daß die erfindungsgemäße Kautschukmischung eine verbesserte Verarbeitungssicherheit aufweist und ein Vulkanisat mit verbessertem Abriebswiderstand (je niedriger der Abrieb, desto höher der Abriebswiderstand) und verbessertem Modul bei gleichzeitig verbessertem Weiterreißwiderstand ergibt. Darüber hinaus zeigt das erfindungsgemäße Vulkanisat einen günstigeren Heat Build-Up.

**Patentansprüche**

1.   Vulkanisierbare Kautschukmischungen basierend auf Dienkautschuken und üblichen Zusätzen **dadurch gekennzeichnet, daß** das in den Mischungen enthaltene Vulkanisiersystem

α) 0,5 bis 3,8 Gew.-Teile der Verbindung (I)

$$R_2N - (C{=}S) - S - S - (CH_2)_X - S - S - (C{=}S) - NR_2 \qquad (I)$$

mit $R = (C_6H_5CH_2)$ und $X = 6$,

β) 0,5 bis 2 Gew.-Teile Schwefel

γ) 0,5 bis 3,0 Gew.-Teile Vulkanisationsbeschleuniger
<u>und</u>

δ) 0 bis 8 Gewichtsteile Kieselsäure

enthält, wobei die Gew.-Teile jeweils auf 100 Gew.-Teile eingesetzten Kautschuk bezogen sind.

**Claims**

1.   Vulcanizable rubber mixtures based on diene rubbers and conventional additives, **characterized in that** the vulcanizing system present in the mixtures contains

α) 0.5 to 3.8 parts by weight of compound (I) :

$$R_2N{-}(C{=}S){-}S{-}S{-}(CH_2)_X{-}S{-}S{-}(C{=}S){-}NR_2 \qquad (I)$$

where $R = (C_6H_5CH_2)$ and $X = 6$,

β) 0.5 to 2 parts by weight of sulfur,

γ) 0.5 to 3.0 parts by weight of vulcanization accelerator
and

δ) 0 to 8 parts by weight of silicic acid,

the parts by weight being based in each case on 100 parts by weight of rubber used.

**Revendications**

1. Compositions de caoutchoucs vulcanisables à base de caoutchoucs diéniques et d'additifs usuels, **caractérisées en ce qu'**elles contiennent un système vulcanisant qui contient lui-même

   $\alpha$) 0,5 à 3,8 parties du composé (I)

$$R_2N - (C=S) - S- S - (CH_2)_x - S - S - (C=S) - NR_2 \qquad (I)$$

   dans laquelle R = $(C_6H_5CH_2)$ et x = 6,

   $\beta$) 0,5 à 2 parties en poids de soufre,

   $\gamma$) 0,5 à 3,0 parties en poids d'accélérateur de vulcanisation, et

   $\delta$) 0 à 8 parties en poids de silice,

   tous ces pourcentages se rapportant à 100 parties en poids du caoutchouc mis en oeuvre.